# EUROPÄISCHE PATENTSCHRIFT

(11) **EP 0 375 621 B1**
(45) Veröffentlichungstag und Bekanntmachung des Hinweises auf die Patenterteilung: **09.03.1994**
(21) Anmeldenummer: 89810961.6
(22) Anmeldetag: 14.12.1989
(51) Int. Cl.: B60P 1/28, B62D 33/04, B61D 17/18

(54) **Isolierte Mulde für Schienen- und/oder Strassenfahrzeuge**
Insulated trough for rail and/or road vehicles
Benne isolée pour véhicule sur rails et/ou véhicule routier

(30) Priorität: 23.12.1988 CH 4789/88
(43) Veröffentlichungstag der Anmeldung: 27.06.1990
(73) Patentinhaber: ALUSUISSE-LONZA SERVICES AG, 8034 Zürich (CH)
(72) Erfinder: Röllin, Ulrich, CH-8048 Zürich (CH)

(56) Entgegenhaltungen:
- EP-A- 0 109 093
- FR-A- 2 518 965
- GB-A- 735 205
- GB-A- 1 040 459
- GB-A- 2 044 187
- GB-A- 2 067 522

## Beschreibung

Die Erfindung bezieht sich auf eine Mulde für Schienen- und/oder Strassenfahrzeuge, insbesondere eine Kippmulde oder einen kippbaren Muldencontainer, mit in metallischen Gurten- und Pfostenprofilen mechanisch stabil gehalterten Platten für die Seitenwände und den Boden, bei geschlossener Mulde auch für das Dach.

Mulden und Muldencontainer, welche auf einem Fahrzeug montiert sind, sind seit mehreren Jahrzehnten bekannt. Die üblicherweise verwendeten Kippmulden mit einer Heckklappe oder einer Hecktüre werden beispielsweise zum Transport von Aushub, Grobkies, Geröll, Bollensteinen, Sand, Kies, Heissmischgut, landwirtschaftlichen Gütern, Granulaten und Paletten verwendet.

Als besonders vorteilhaft haben sich nach dem Baukastenprinzip hergestellte Mulden aus Aluminium erwiesen, welche das Eigengewicht der Fahrzeuge stark reduzieren, und so bei gleichem Gesamtgewicht eine wesentlich höhere Nutzlast erlauben. Aluminium ist korrosionsbeständig und hat sich auch in härtestem Einsatz bewährt.

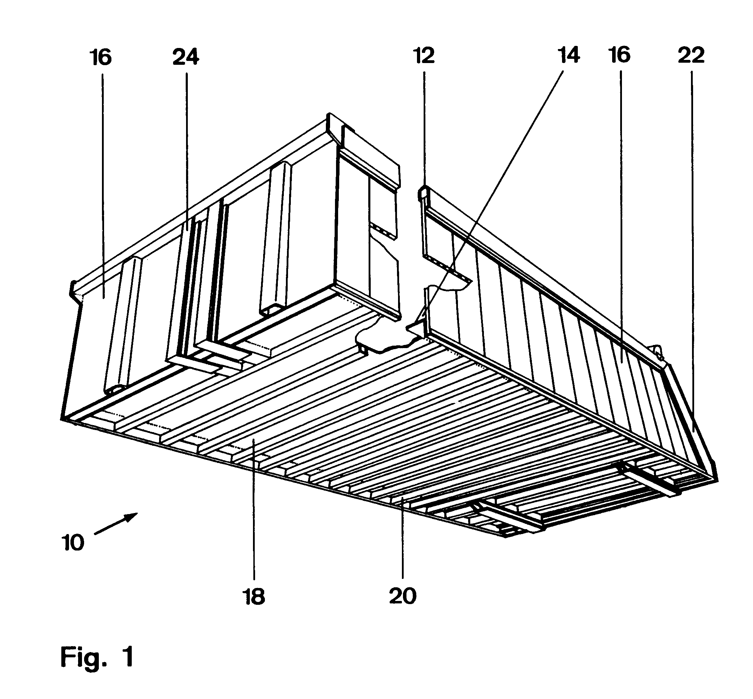

Fig. 1 zeigt ein Beispiel einer bekannten Kippmulde 10 für Strassenfahrzeuge in perspektivischer Darstellung, welche zur Veranschaulichung der einzelnen Konstruktionselemente teilweise aufgeschnitten ist. Die Mulde besteht im wesentlichen aus einem Obergurt 12, einem Untergurt 14, Seitenwandplatten 16 und Bodenwandplatten 18. Der Untergurt stützt auf Querträgern 20 ab, welche ihrerseits auf Längsträgern eines nicht dargestellten Fahrzeugs aufliegen.

Die Heckwand der Mulde 10 ist als aussenliegende Heckwandklappe 22 ausgebildet.

Die stirnseitigen Seitenwandplatten 16 auch Frontplatten genannt, sind von vertikalen, rippenartig angeordneten Verstärkungsprofilen zum Angriff der Kippvorrichtung versehen.

Die glatten, durch die Seitenwandplatten 16 gebildeten Aussenwände erlauben eine wirksame Werbebeschriftung, vereinfachen die Reinigung und haben einen geringeren Luftwiderstand als andere Muldentypen mit aussenliegenden Verstärkungsprofilen oder durchgehenden, aussenliegend umgebogenen Querspanten.

Die FR-PS 2 518 965 beschreibt einen isolierten Kipperaufbau in zweischaliger Ausführungsform, wobei die innere und äussere Schale durch Distanzstücke im Abstand gehalten werden und der Abstand mit einer Isoliermasse aufgefüllt ist. Die Distanzstücke stellen dabei an sich unerwünschte Wärmebrücken dar.

Die GB-A-2 044 187 beschreibt einen isolierten Frachtcontainer, wobei mittels Obergurtprofilen und den daran befestigten Seitenwänden der Konstruktion die notwendige Eigenstabilität verliehen werden soll. Die vorgeschlagene Konstruktion stellt auf Schraub- und Nietverbindungen zwischen den einzelnen Konstruktionselementen ab. Zur Ausgestaltung dieser Verbindungen sind weit in den oder durch den Isolierbereich ragende Profile vorgesehen, die ihrerseits wiederum Wärmebrücken darstellen.

Der Erfinder hat sich die Aufgabe gestellt, eine Mulde der eingangs genannten Art zu schaffen, in welcher die Einfülltemperatur des Transportguts mit wenig Investitions- und Betriebsaufwand möglichst konstant und die Lärmentwicklung möglichst gering gehalten werden können. Eine einfache Herstellung nach dem Baukastenprinzip, ein geringes Gewicht und eine hohe Abriebfestigkeit der Innenhaut sollen weiterhin gewährleistet sein.

Erfindungsgemäss wird die Aufgabe dadurch gelöst, dass die Untergurt-, Obergurt-, Seitenwandpfosten-, Mittelpfosten-, und Heckenwandpfostenprofil/e vollständig zweigeteilt ausgebildet sind und durch wenigstens teilweise aus Isolationsmaterial bestehende Platten mechanisch stabil verbunden sind, und deren Innen- und Aussenprofile derart mit isolierenden Seitenwand-, Boden- und/oder Dachplatten verbunden sind, dass keine Wärme- bzw. Kältebrücken entstehen und dass die äusseren Deckschichten der Seitenwand-, Boden- und/oder Dachplatten mit äusseren Gurten- bzw. Pfostenprofilen, und die inneren Deckschichten der Seitenwand-, Boden- und/oder Dachplatten mit den inneren Gurten- bzw. Pfostenprofilen verklebt oder verschweisst sind.

Bei Kippmulden und kippbaren Muldencontainern, welche die bevorzugten Ausführungsformen der Erfindung darstellen, ist die Heckwand als Heckrahmen mit Klappe oder Türe ausgebildet, durch welche das Transportgut beim Kippen entleert wird. Eine Heckklappe kann aussen- oder innenliegend sein und eine Schütte aufweisen.

Die Erfahrungen haben gezeigt, dass die Wärmeisolation auch gegen Lärmeinwirkungen wirksam ist. Dies ist insbesondere beim Be- und Entladen, in geringerem Masse auch beim Fahren, von zunehmender Bedeutung.

Erfindungsgemäss können im Bereich des Obergurts, des Untergurts, der Stirnwandpfosten, der Mittelpfosten und der Heckrahmenpfosten keine Wärme- bzw. Kältebrücken mehr auftreten, weil diese Profile vollständig zweigeteilt und durch wenigstens teilweise aus Isolationsmaterial bestehende Platten mechanisch stabil verbunden sind.

Ein Mittelpfosten entspricht in seiner Bauweise im wesentlichen einem Stirnwand- oder Heckrahmenpfosten. In der Praxis wird ein Mittelpfosten jedoch nur bei Grossraummulden eingesetzt.

Die isolierenden Seitenwand-, Boden- und Dachplatten können Holzbretter oder reine Kunststoffplatten sein. Vorzugsweise sind sie jedoch als Verbundplatten ausgebildet, bestehend aus einer wärme- und lärmisolierenden Kernschicht und zwei aussenliegenden, vorzugsweise metallischen Deckschichten. Die Deckschichten können auch aus nichtmetallischen, jedoch vom Isolationsmaterial abweichenden Werkstoffen bestehen, beispielsweise Kunststoffen oder Gummi, wobei im letzten Fall vorzugsweise eine Metallfolie zwischen Kern- und Deckschicht angeordnet ist. Weiter kann eine Deckschicht metallisch die andere nichtmetallisch sein.

Als besonders günstig haben sich im Bereich der Seitenwände und des Bodens Verbundplatten mit einer dickeren inneren und einer dünneren äusseren, vorzugsweise metallischen Deckschicht erwiesen. Diese asymmetrischen Verbundplatten erlauben einen maximalen Kräftefluss.

Nach einer weiteren Variante können vorzugsweise metallische Deckschichten der Verbundplatten innen und aussen aus verschiedenem Material bestehen, wobei die innere, mit dem Füllgut in direktem Kontakt stehende Deckschicht aus verschleissfesterem Material besteht als die äussere.

Beide Varianten können kombiniert werden, indem die innere, vorzugsweise metallische Deckschicht der Verbundplatte aus einem dickeren und verschleissfesteren, die äussere, vorzugsweise metallische Deckschicht aus einem dünneren, weniger verschleissfesten Material besteht.

Schliesslich können metallische Deckschichten individuell mit dem Fachmann bekannten Massnahmen, wie z.B. Wärmebehandlung und/oder Verformung, versteift werden, je nach den spezifischen Erfordernissen des in der Mulde zu transportierenden Guts.

Die isolierende Kernschicht der Verbundplatte besteht aus bekannten Dämmaterialien, insbesondere Kunststoffschäume, Steinwolle usw. Die mechanische Festigkeit der Verbundplatten kann weiter erhöht werden, wenn die isolierende Kernschicht aus einem steifen, geschäumten Kunststoff besteht.

Aus der zweiteiligen Bauweise der Gurten- und Pfostenprofile ergibt sich die Möglichkeit, den Anschluss zur jeweils angrenzenden Baugruppe in einer maximalen Verbindungsvielfalt so zu gestalten, dass Kleben und Schweissen realisierbar sind.

Nach einer ersten Variante werden die Seitenwand-, Boden- und/oder Dachplatten mittels eines flächig aufgetragenen Klebstoffs oder eines Klebbandes mit den Gurten- bzw. Pfostenprofilen verbunden. Je nach dem Klebverfahren bzw. dem Kleber ist in der Montagephase ein Anpressen oder eine Fixierung der Bauteile notwendig. Dies kann bei der vorliegenden Profilgestaltung auf einfache Art durch Nieten und Schrauben erreicht werden, falls keine andern geeigneten Vorrichtungen zur Verfügung stehen.

Als Kleber werden vorzugsweise bekannte Kunstharzklebstoffe, beispielsweise auf der Basis von Epoxidharzen, Phenolharzen, Polyurethanharzen, Acrylate (Acrylic) usw., eingesetzt.

Nach einer zweiten, jedoch nur bei Verbundplatten mit metallischen Deckschichten anwendbaren Variante, werden die Seitenwand-, Boden- und/oder Dachplatten mit den Gurten- bzw. Pfostenprofilen verschweisst. Die Kernschichten werden, wenn nötig, mit unter den Deckschichten angeordneten Schweisseinlagen geschützt.

Konstruktiv oder toleranzseitig bedingte Hohl- und Zwischenräume im Verbindungsbereich der Platten mit den Gurten- und Pfostenprofilen können, entsprechend den Transportvorschriften des zu transportierenden Ladegutes, nach der Baugruppenmontage ausgeschäumt werden.

Weiter können Hohl - oder Zwischenräume im Verbindsbereich der Platten mit den Gurten- und Pfostenprofilen mit einem isolierenden Bauteil ausgelegt werden. An bestimmten Stellen kann das isolierende Bauteil gleichzeitig auch der Kraftübertragung dienen.

Die Erfindung erlaubt in idealer Weise, die eingangs erwähnten Vorteile bewährter Mulden, insbesondere von Kippmulden und von kippbaren Muldencontainern, in isolierten Ausführungsformen beizubehalten. Wärmeverluste oder eine unerwünsche Wärmezufuhr können je nach Erfordernissen niedrig bis sehr niedrig gehalten werden.

Die Erfindung wird anhand der in der Zeichnung dargestellten Ausführungsbeispiele näher erläutert. Es zeigen schematisch:
- Fig. 2 einen teilweisen Vertikalschnitt durch den Bereich einer Seitenwand eines Muldencontainers,
- Fig. 3 einen teilweisen Horizontalschnitt durch den Bereich einer Seitenwand einer Kippmulde,
- Fig. 4 einen vertikalen Teilschnitt durch die Obergurtpartie, mit geklebter Verbindung, und
- Fig. 5 einen vertikalen Teilschnitt durch Obergurtpartie, mit geschweisster Verbindung.

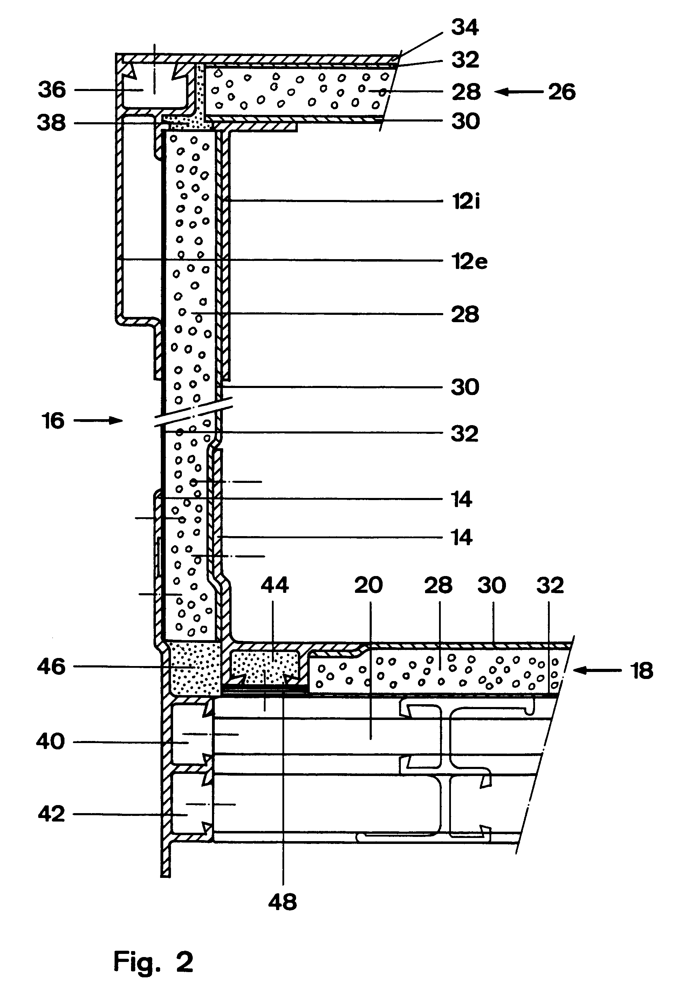

Fig. 2 zeigt die zweiteilig ausgebildeten Obergurt- 12 und Untergurtprofile 14. Die Seitenwand- 16, Boden- 18 und Dachplatten 26 sind Verbundprofile mit einer Kernschicht 28 aus einer steifen, 15 - 50 mm dicken Schaumstoffplatte aus Polyurethan, einer 4 - 12 mm dicken inneren Deckschicht 30 aus Aluminium und einer 0,7 - 3 mm dicken äusseren Deckschicht 32, ebenfalls aus Aluminium, wobei hier und im übrigen mit "Aluminium" eine geeignete, dem Fachmann bekannte Aluminiumlegierung bezeichnet wird, beispielsweise eine Aluminium-Magnesium-Manganlegierung.

Die als asymmetrische Verbundplatte ausgebildete Seitenwandplatte 16 ist mit dem längslaufenden äusseren Obergurtprofil 12e und dem inneren Obergurtprofil 12i verbunden. Die Dachplatte 26 liegt auf dem inneren Obergurtprofil 12i auf und ist über ein in einer hinterschnittenen Nut 36 mit nicht dargestellten Schraube und Klemmplättchen befestigtes Fixierstück 34 am äusseren Obergurt 12e befestigt. Der konstruktionsbedingte Hohlraum 38 im Verbindungsbereich des Obergurts 12 ist nachträglich ausgeschäumt worden.

Im unteren Bereich ist die Seitenwandplatte 16 am längslaufenden äusseren Untergurtprofil 14e und am inneren Untergurtprofil 14i festgelegt. Das äussere Untergurtprofil 14e ist über Klemmverbindungen an einem Querträger 20 festgelegt. Die Klemmplättchen der Verschraubung (beides nicht gezeigt) befinden sich in den hinterschnittenen Nuten 40, 42.

Die hinterschnittene Nut 44 im inneren Untergurtprofil 14i ist, wie der konstruktionsbedingte Hohlraum 46, ausgeschäumt.

Dank des unterhalb der Nut 44 eingelegten wärmedämmenden Bauelements 48 kann über das innere Untergurtprofil 14i eine direkte Krafteinleitung von der Innenseite der seitlichen Verbundplatte auf den Querträger 20 erfolgen.

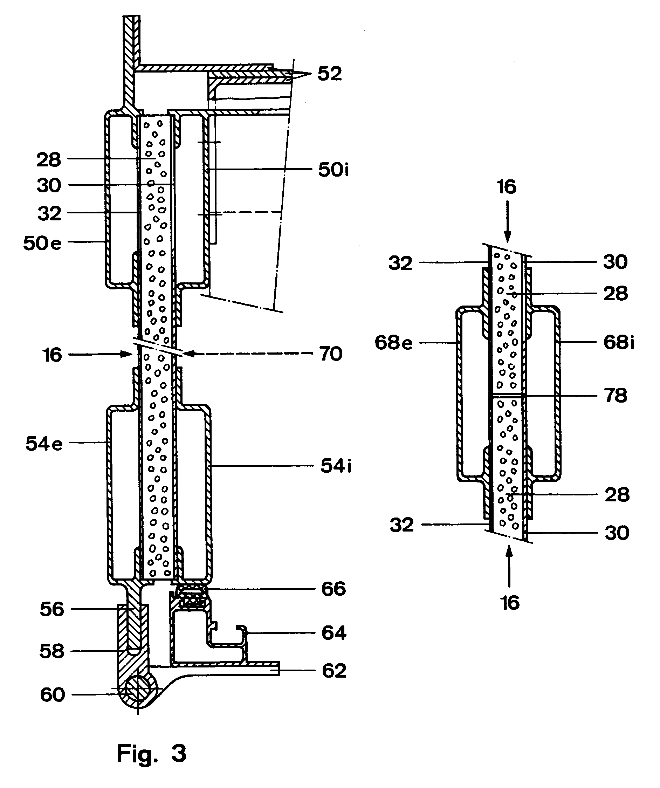

In Fig. 3 wird gezeigt, wie die als asymetrische Verbundplatten ausgebildeten Seitenwandplatten 16 in zweiteilig ausgebildeten, vertikalen Pfostenprofilen gehaltert sind.

Der äussere Stirnwandpfosten 50e und der innere Stirnwandpfosten 50i bilden den vordern linken Eckbereich der Mulde. Die isolierte Stirnwand liegt unterhalb der Schnittebene. Es sind nicht erfindungswesentliche Profilteile 52 zur Halterung des Daches und zum Angriff der Kippvorrichtung sichtbar, welche Profilteile in bekannter Weise derart ausgebildet und montiert sind, das keine Wärme- bzw. Kältebrücken gebildet werden.

Am äussern Heckrahmenpfostenprofil 54e ist die Hecktüre, nach andern Ausführungsformen die Heckklappe, schwenkbar gelagert. Dazu dient ein Scharnier, welches einen gabelförmig über eine Profilfahne 56 des äusseren Heckrahmenprofils gestülpten Scharniersupport 58, einen Bolzen 60 und ein Scharnierband 62 umfasst. Am schwenkbaren Scharnierband 62 ist ein Einfassprofil 64 für die Hecktüre befestigt. Eine im Querschnitt pilzförmige Dichtung 66 schliesst den Muldeninnenraum bei geschlossener Hecktüre und dient, an das innere Heckrahmenpfostenprofil 54i anschlagend, gleichzeitig als Puffer.

Insbesondere bei Grossraummulden kann im Bereich der Seitenwandung wenigstens ein Mittelpfosten 68 ausgebildet sein, der selbstverständlich auch zweiteilig ausgebildet sein muss. Etwa im mittleren Bereich des äusseren Mittelpfostenprofils 68e und des inneren Mittelpfostenprofils 68i stossen die Seitenwandplatten 16 aufeinander. Die Stossverbindung beinhaltet einen schlitzförmigen Hohlraum 78 zum Auffangen von toleranzseitigen Schwankungen.

Der gestrichelte Pfeil 70 soll andeuten, wo der Mittelpfosten liegt, falls ein solcher vorhanden ist.

Fig. 2 und 3 zeigen deutlich das grundlegende Merkmal der Erfindung, nämlich die zweiteilige Ausbildung der Gurten und Pfosten ohne Wärme- und Kältebrücken. Selbstverständlich müssen auch die Seitenwand- 16, Boden- 18 und Dachplatten 26 an sich isolierend ausgebildet sein, indem sie vollständig aus isolierendem Material bestehen oder bei einer isolierenden Kernschicht 28 mit metallischen Deckschichten 30, 32 keine nichtisolierenden Verbindungsstege haben.

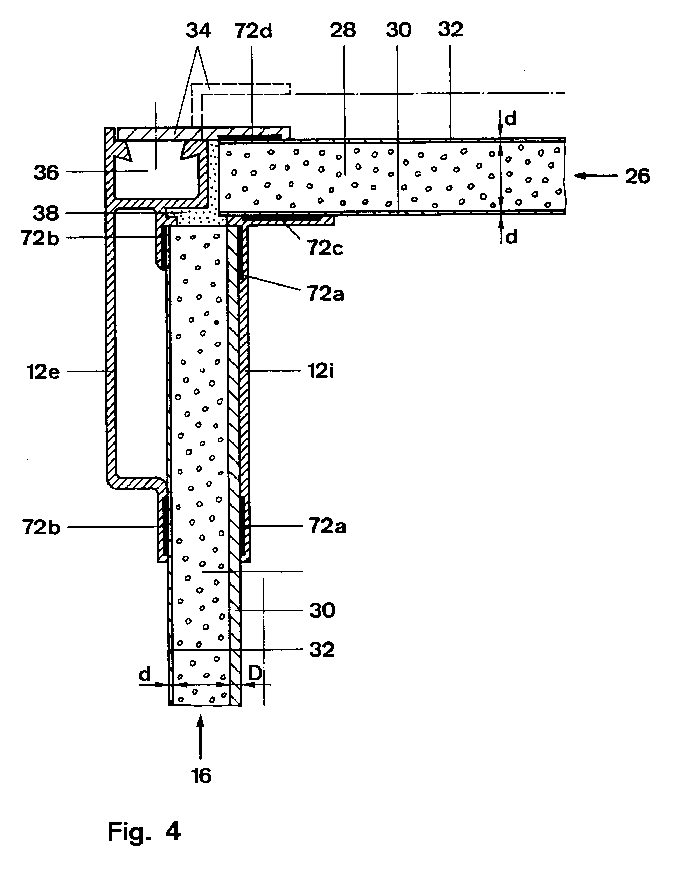

Anhand von Fig. 4 wird die Verbindung der Seitenwandplatten 16 und der Dachplatten 26 mit dem äusseren und inneren Obergurt 12e, 12i mittels einer Klebverbindung im Detail gezeigt. Der Uebersichtlichkeit wegen sind die Klebverbindungen 72 übertrieben dick gezeichnet.

Bei der Montage wird vorerst das innere Obergurtprofil 12i mit der inneren Deckschicht 30 der Seitenwandplatte 16 mittels der Klebverbindungen 72a miteinander verbunden. In einer zweiten Montagestufe wird das äussere Obergurtprofil 12e mit den Klebverbindungen 72b aufgebracht. Anschliessend wird die Dachplatte 26 über eine Klebverbindung 72c mit der horizontalen Fahne des inneren Obergurtprofils 12i verbunden. Schliesslich wird das Fixierstück 34, welches in der längslaufenden hinterschnittenen Nut 36 angeschraubt ist, über die Klebverbindung 72d mit den Dachplatten 26 verbunden. Damit ist eine mechanisch stabile Verbindung von Seitenwand- 16 und Dachplatten 26 hergestellt, wobei der Innenraum der Mulde gegen aussen isoliert bleibt. Das äussere Obergurtprofil 12e, das Fixierstück 34 und die äusseren metallischen Deckschichten 32 treten nur mit Isolationsmaterial in Kontakt.

Das anhand von Fig. 4 gezeigte Montageprinzip für das Verkleben wird immer eingehalten. Alle Klebverbindungen 72 sind so ausgeführt, dass der in einer dünnen Schicht aufgetragene flüssige Kleber nicht durch Abstreifen weggestossen werden kann. Ein mit dem anderen zu verbindender Teil wird an der Klebestelle stets von vorn aufgelegt und jede Bewegung entlang der zu verklebenden Fläche vermieden.

Je nach dem Klebeverfahren und dem verwendeten Kleber ist in der Montagephase ein vorgegebener Anpressdruck und/oder eine Fixierung der Bauteile erforderlich. Die erfindungsgemäss verwendeten Profile sind so gestaltet, dass - falls keine speziellen Vorrichtungen zum Anpressen oder Fixieren vorhanden sind - auf einfache Art, partiell durch Nieten und/oder Schrauben, gearbeitet werden kann.

Fig. 4 zeigt auch, dass die als Dachplatten 26 verwendeten Verbundplatten innen und aussen eine metallische Deckschicht der gleichen Dicke d haben. Das Füllgut der Mulde entfaltet entlang der Dachplatte 26 keine abrasive Wirkung, deshalb ist keine Verschleisschicht notwendig, wie dies bei den Seitenplatten 16 und den Bodenplatten 18 (Fig. 2) erforderlich ist. Die Dicke D der inneren metallischen Deckschicht 30 der Seitenwand 16 ist wesentlich grösser als die Dicke d der äusseren Deckschicht.

Falls die Mulde Einfüllgut mit einer tiefen Temperatur enthält, weist die Dachplatte 26 eine grössere Dicke auf. Dies wird mit einem abgewinkelten, gestrichelten Fixierstück 34 angedeutet, welchem eine entsprechend dimensionierte Dachplatte 26 anliegt, mit einer strichpunktierten Linie 27 angedeutet. Damit wird der stärkeren Sonneneinstrahlung im Dachbereich Rechnung getragen. Mit einer weiteren strichpunktierten Linie 17 ist angedeutet, dass die Dicke der Seitenplatten 16 grösser sein kann, wenn das Isolationsvermögen grösser sein soll.

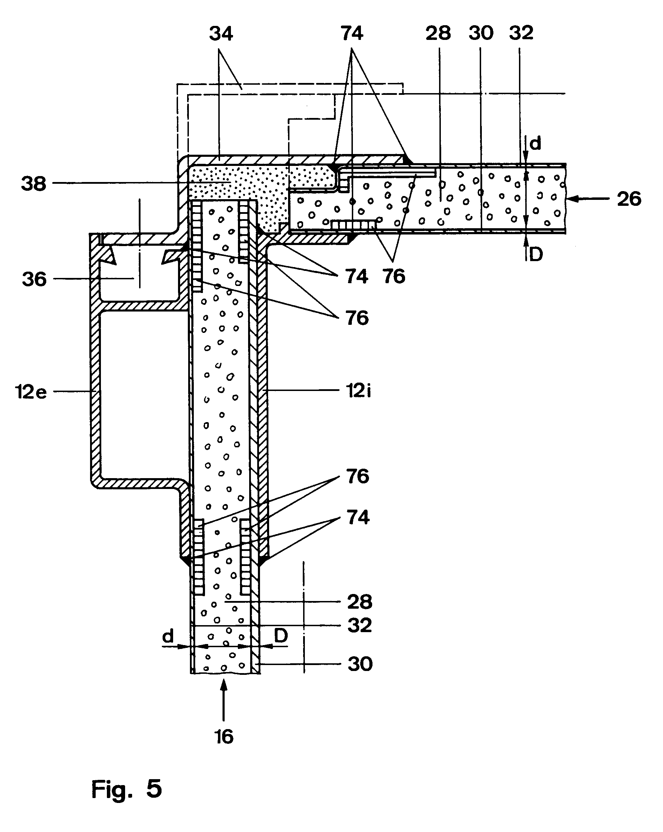

Fig. 5 zeigt eine Verbindung der Seitenwandplatten 16 und Dachplatten 26 mit dem aus einem inneren Teil 12i und einem äusseren Teil 12e bestehenden Obergurt 12. Die Verbindung der metallischen Teile erfolgt mittels Schweissens. Unter jeder Schweissnaht 74 ist eine Schweisseinlage 76 in Form eines Plättchens vorgesehen. Dieses schützt das Material der Kernschicht 28 der Verbundplatten vor einer Beschädigung. Anstelle einer Schweissnaht 74 sind auch einzelne Schweisspunkte möglich.

Nach dieser Variante besteht im oberen Eckbereich ein grosser Hohlraum 38, der nachträglich ausgeschäumt wird.

## Patentansprüche

1. Mulde für Schienen- und/oder Strassenfahrzeuge, insbesondere Kippmulde oder kippbarer Muldencontainer, mit in metallischen Gurten- (12, 14) und Pfostenprofilen (50, 54, 68) mechanisch stabil gehalterten Platten (16, 18, 26) für die Seitenwände und den Boden, bei einer geschlossenen Mulde auch für das Dach,
dadurch gekennzeichnet, dass
die Untergurt- (14e, 14i), Obergurt- (12e, 12i), Stirnwandpfosten- (50e, 50i), Mittelpfosten- (68e, 68i) und Heckwandpfostenprofil/e (54e, 54i) vollständig zweigeteilt ausgebildet sind und durch wenigstens teilweise aus Isolationsmaterial bestehende Platten mechanisch stabil verbunden sind, und deren Innen- und Aussenprofile derart mit isolierenden Seitenwand- (16), Boden- (18) und/oder Dachplatten (26) verbunden sind, dass keine Wärme- bzw. Kältebrücken entstehen und dass die äusseren Deckschichten der Seitenwand-, Boden und/oder Dachplatten mit den äusseren Gurten- bzw. Pfostenprofilen, und die inneren Deckschichten der Seitenwand-, Boden- und/oder Dachplatten mit den inneren Gurten bzw. Pfostenprofilen verklebt oder verschweisst sind.

2. Mulde nach Anspruch 1, dadurch gekennzeichnet, dass die Platten (16, 18, 26) als Verbundplatten, bestehend aus einer wärmeisolierenden Kernschicht (28) und vorzugsweise metallischen Deckschichten (30, 32), ausgebildet sind.

3. Mulde nach Anspruch 2, dadurch gekennzeichnet, dass die innere Deckschicht (30) von die Seitenwände und den Boden der Mulde (10) bildenden Verbundplatten dicker ist als die äussere Deckschicht (32), und/oder die innere Deckschicht (30) aus einem verschleissfesten Material besteht.

4. Mulde nach Anspruch 2 oder 3, dadurch gekennzeichnet, dass die Kernschicht (28) der Verbundplatten aus einem Schaumstoff besteht.

5. Mulde nach einem der Ansprüche 2 - 4, dadurch gekennzeichnet, dass die metallische Deckschichten (30, 32) aufweisenden Seitenwand- (16), Boden- (18) und/oder Dachplatten (26) mit den Gurten- (12, 14) bzw. Pfostenprofilen (50, 54, 68) verschweisst sind.

6. Mulde nach Anspruch 5, dadurch gekennzeichnet, dass im Bereich einer Schweissnaht (74) unterhalb der metallischen Deckschicht (30, 32) einer Verbundplatte eine Schweisseinlage (76) angeordnet ist.

7. Mulde nach einem der Ansprüche 1, 5 - 6, dadurch gekennzeichnet, dass die Seitenwand- (16), Boden- (18) und/oder Dachplatten (26) über ein Fixierstück (34) mit den Gurten- (12, 14) bzw. Pfostenprofilen (50, 54, 68) verklebt oder verschweisst sind.

8. Mulde nach einem der Ansprüche 1 - 7, dadurch gekennzeichnet, dass Hohlräume (38, 46) im Verbindungsbereich der Platten (16, 18, 26) mit den Gurten- (12, 14) und Pfostenprofilen (50, 54, 68) mit Isoliermaterial ausgeschäumt sind.

9. Mulde nach einem der Ansprüche 1 - 8, dadurch gekennzeichnet, dass Hohlräume im Verbindungsbereich der Platten (16, 18, 26) mit den Gurten- (12, 14) und Pfostenprofilen (50, 54, 68) mit einem wärmedämmenden Bauteil (48) ausgelegt sind, welches vorzugsweise auch der Kraftübertragung dient.

## Claims

1. Trough for rail and/or road vehicles, especially a tipper trough or a tip-up trough container, comprising panels (16, 18, 26) for the side walls and the bottom, and, when the trough is closed, also for the roof, supported in a mechanically stable manner in metal flange (12, 14) and post profiles (50, 54, 68), characterised in that the lower flange (14e, 14i), the upper flange (12e, 12i), the front wall post (50e, 50i), the centre post (68e, 68i) and the rear wall post profile/s (54e, 54i) are all designed in two parts and are connected in a mechanically stable manner by panels consisting at least partially of insulating material, and the inner and outer profiles of which are connected to insulating side wall (16), bottom (18) and/or roof panels (26) in such a manner that no heat or cold bridges are produced, and that the outer upper layers of the side wall, bottom and/or roof panels are glued or welded to the outer flange or post profiles and the inner upper layers of the side wall, bottom and/or roof panels are glued or welded to the inner flange or post profiles.

2. Trough according to claim 1, characterised in that the panels (16, 18, 26) are designed as sandwich panels, consisting of a heat-insulating core layer (28) and two preferably metal upper layers (30, 32).

3. Trough according to claim 2, characterised in that the inner upper layer (30) of sandwich panels forming the side walls and the bottom of the trough (10) is thicker than the outer upper layer (32) and/or the inner upper layer (30) consists of an abrasion-resistant material.

4. Trough according to claim 2 or claim 3, characterised in that the core layer (28) of the sandwich panels consists of a foam.

5. Trough according to one of claims 2 - 4, characterised in that the side wall (16), bottom (18) and/or roof panels (26) having metal upper layers (30, 32) are welded to the flange (12, 14) or post profiles (50, 54, 68).

6. Trough according to claim 5, characterised in that a welded insert (76) is arranged below the metal upper layer (30, 32) of a sandwich panel in the region of a welded seam (74).

7. Trough according to one of claims 1 - 6, characterised in that the side wall (16), bottom (18) and/or roof panels (26) are glued or welded via a fixing piece (34) to the flange (12, 14) or post profiles (50, 54, 68).

8. Trough according to one of claims 1 - 7, characterised in that cavities (38, 46) in the connecting region between the panels (16, 18, 26) and the flange (12, 14) and post profiles (50, 54, 68) are expanded with insulating material.

9. Trough according to one of claims 1 - 8, characterised in that cavities in the connecting region between the panels (16, 18, 26) and the flange (12, 14) and post profiles (50, 54, 68) are inlaid with a thermally insulating component (48) which preferably also serves for load transmission.

## Revendications

1. Benne pour véhicule ferroviaires et/ou routiers, notamment benne basculante ou conteneur à benne basculante, comprenant des panneaux (16, 18, 26) de parois latérales et de fond, ainsi que de toit pour le cas d'une benne fermée, qui sont fixés par une liaison mécaniquement solide dans des profilés métalliques de ceinture (12, 14) et de montants (50, 54, 68),
caractérisée
en ce que les profilés (14e, 14i) de la ceinture inférieure, (12e, 12i) de la ceinture supérieure, (50e, 50i) des montants de la paroi frontale, (68e, 68i) des montants centraux, (54e, 54i) des montants de la paroi arrière, sont réalisés entièrement en deux parties, et sont reliés par une liaison mécaniquement solide par des panneaux qui sont composés au moins en partie d'une matière isolante, et dont les profilés intérieurs et extérieurs sont assemblés aux panneaux isolants (16) de la paroi latérale, (18) du fond et/ou (26) du toit, de telle manière qu'il ne se produise pas de ponts thermiques de transmission de la chaleur ou du froid, et en ce que les couches de revêtement extérieures des panneaux de la paroi latérale, du fond et/ou du toit sont collées ou soudées aux profilés extérieurs des ceintures ou des montants et les couches de revêtement intérieures des panneaux de la paroi latérale, du fond et/ou du toit sont collées ou soudées aux profilés intérieurs des ceintures ou des montants.

2. Benne selon la revendication 1, caractérisée en ce que les panneaux (16, 18, 26) sont constitués par des panneaux composites composés d'une couche d'âme isolante thermique (28) et de couches de revêtement (30, 32) de préférence métalliques.

3. Benne selon la revendication 2, caractérisée en ce que la couche de revêtement intérieure (30) des panneaux composites formant les parois latérales et le fond de la benne (10) est plus épaisse que la couche de revêtement extérieure (32) et/ou la couche de revêtement intérieure (30) est faite d'une matière résistante à l'usure.

4. Benne selon la revendication 2 ou 3, caractérisée en ce que la couche d'âme (28) des panneaux composites est faite de mousse.

5. Benne selon une des revendications 2 à 4, caractérisée en ce que les panneaux (16, 18, 26) de la paroi latérale, du fond et/ou du toit, qui présentent des couches de revêtement métalliques (30, 32), sont soudés aux profilés (12, 14) des ceintures et (50, 54, 68) des montants.

6. Benne selon la revendication 5, caractérisée en ce que, dans la région d'un joint soudé (74), une insertion de soudage (76) est disposée au-dessous de la couche de revêtement métallique (30, 32) d'un panneau composite.

7. Benne selon une des revendications 1, 5 - 6, caractérisée en ce que les panneaux (16, 18, 26) de la paroi latérale, du fond et/ou du toit sont collés ou soudés aux profilés (12, 14) des ceintures ou (50, 54, 68) des montants par l'intermédiaire d'une pièce de fixation (64).

8. Benne selon une des revendications 1 à 7, caractérisée en ce que les cavités (38, 46) situées dans la région de l'assemblage entre les panneaux (16, 18, 26) et les profilés (12, 14) des ceintures ou (50, 54, 68) des montants sont comblées d'une matière isolante.

9. Benne selon une des revendications 1 à 8, caractérisée en ce que les cavités situées dans la région de l'assemblage entre les panneaux (16, 18, 26) et les profilés (12, 14) des ceintures et (50, 54, 68) des montants sont comblées avec un composant (48) isolant thermique qui, de préférence, sert aussi à la transmission des efforts.
